# EUROPEAN PATENT APPLICATION

(11) **EP 3 684 087 A1**
(43) Date of publication of application: **22.07.2020**
(21) Application number: 19000027.3
(22) Date of filing: 15.01.2019
(51) Int. Cl.: H04W 12/00, H04W 12/08

(54) **ON-DEMAND PROVISIONING OF UICCS AND SERVER COMPONENTS**

(71) Applicant: Giesecke+Devrient Mobile Security GmbH, 81677 München (DE)
(72) Inventor: Bosved, Jan, 131 40 Nacka (SE); Eskola, Susanna, 19255 Sollentuna (SE)

(57) **Abstract**

The present invention is directed towards a method for on-demand customization of a secure element using a generic configuration, which allows efficient provisioning of components to secure elements being embedded in mobile devices using a generic provisioning server. Likewise the present invention is directed towards a system for on-demand customization of a secure element in accordance with the suggested method. Moreover, a computer program product is suggested with instructions implementing the suggested method and operating the system.

## Description

The present invention is directed towards a method for on-demand customization of a secure element using a generic configuration, which allows efficient provisioning of components to secure elements being embedded in mobile devices using a generic provisioning server. Likewise the present invention is directed towards a system for on-demand customization of a secure element in accordance with the suggested method. Moreover, a computer program product is suggested with instructions implementing the suggested method and operating the system.

WO 2017/028 872 A teaches a cloud-based method for provisioning enhanced endurance of an embedded Universal Integrated Circuit Card by organizing updates.

US 2018 0063667 A1 teaches a method for loading a profile for a mobile radio subscription from a data preparation server into a subscriber entity module.

DE 10 2015 001 815 A1 teaches a subscriber identity module comprising in the subscriber identity module a first subscription profile with a file structure.

EP 3 275 228 A1 teaches a method for loading a profile for a mobile subscription from a data conditioning server and furthermore discloses a subscription manager.

GSMA SAS Standard for Subscription Manager Roles, version 3.0, 31 March 2017, GSM Association teaches a subscription manager along with process modules.

It is commonly known in the art to provide mobile devices including either a Universal Integrated Circuit Card UICC or an embedded Universal Integrated Circuit Card eUICC. Such SIM cards provide data for profile management which may, amongst others, be required for a Mobile Network Operation MNO during the establishment of a connection. Such a connection may be required for payload such as speech or data transfer or signaling information. It is commonly known in the art to perform a so-called Machine to Machine M2M communication for instance in the application domain of the Internet of Things, where several devices communicate with each other.

Moreover, several standards are known from organizations such as ETSI and 3GPP. Typically, the embedded Universal Integrated Circuit Card relay on such communication protocols and use the underlying hardware platform. The embedded Universal Integrated Circuit Cards are operated by respective software components which need to be provisioned, which implies high technical effort.

Today the eUICCs cannot be ordered before all required eUICC and provisioning profile parameters are known. At the same time, for example the IP address/FQDN of the customer's Subscription Manager SubMan server, which is necessary to have on all Subscription Manager SubMan eUICCs, is often known late in the customer projects.

This means that the missing parameter values delay the time of card order and obviously the card delivery. This is a complex and time-consuming part of customer project. It also means that the complete "time to market" is longer.

Time between manufacturing eUICCs and activating them for the first time can be long. Configuration requirements may change during that period. Today's eUICC deployment process is also sensitive to errors, with several sequential and time-consuming test card rounds.

There is no method to provisioning different server side entities after the eUICC powers on for the first time. Now it is expected that all data is in place at that moment in time.

Today the initial eUICCs provisioned for a customer have a large number of customer-specific settings and dependency with the server system to be used. It is not possible to manufacture the eUICCs for production before all appropriate information is collected to define all eUICC parameters correctly.

Since the eUICC includes a large number of settings related to the intentioned server system, there is no possibility for flexible server allocations at the moment.

The state of the art is also lacking a method to provision different server systems first when the eUICC is powered on.

In several application domains large quantities of end devices, each including an embedded Universal Integrated Circuit Card, are involved and accordingly, there is a huge technical effort in customizing each of the settings. Firstly, such a customization process is very labor intense and secondly, such a process is prone to errors. Consequently, there is a need for an improved method, which allows the provisioning or customizing data efficiently.

Hence, it is the object of the present invention to provide a method for on-demand customization of a secure element using a generic configuration which can be performed with a low technical effort and still delivers reliable results. Furthermore, it is an object of the present invention that such a method can be performed efficiently regarding the required time to market of embedded Universal Integrated Circuit Cards. Moreover, it is an object of the present invention to provide a respective system being arranged in conformance with the suggested method and to suggest a computer program product comprising instructions implementing the method being able to operate the suggested system.

The object is solved by features of independent claims. Further advantages are provided by dependent claims.

Consequently, a method for on-demand customization of a secure element using a generic configuration is suggested comprising the steps of deploying the generic configuration on each of a number of secure elements using a generic provisioning server, preventing data communication between the secure elements and further servers, and meanwhile connecting a unique configuration for respectively each of the secure elements and upon performing a first power-on operation of the secure element in a mobile device, triggering the provisioning of the unique configuration and configuring the secure element according to respectively one unique configuration.

The person skilled in the art recognizes that the above-mentioned method steps can be performed iteratively and furthermore may require substeps. For instance, the steps of preventing and triggering along with configuring can be performed individually for each secure element. Hence, a generic configuration can be provided for all of the secure elements and the customization is performed individually on each single secure element.

The suggested method is a method for on-demand customization as generic configurations are deployed on each embedded Universal Integrated Circuit Card and only in case the customization process is triggered, the customization as such is performed using a unique configuration. Such a unique configuration is tailored to each secure element and accordingly differs from the generic configuration. The generic configuration comprises the same instruction set for each of the secure elements. Such a generic configuration is deployed and is reconfigured at the first time the embedded Universal Integrated Circuit Card is operated in connection with the mobile device. In case the mobile device is switched on and the SIM card is embedded, the generic configuration is loaded and furthermore, a specific configuration, namely the unique configuration, is obtained and installed accordingly. Installing the unique configuration requires that the generic configuration is adapted and reconfigured such that specific characteristics are deployed on the secure element.

Such an approach decreases the time to market as the unique configuration is not provided right from the start but a generic configuration is involved. Consequently, the unique configuration is only required once the secure element is operated and accordingly, the unique configuration has to be provided only at the point in time when the secure element is operated in the field.

Deploying the generic configuration on each of the secure elements is performed using a generic provisioning server which remotely communicates with the mobile device into which the secure element is integrated. Hence, a communication interface is used and the generic provisioning server sends the generic configuration to each of the involved secure elements. Once the generic configuration is deployed on the secure element, it can be delivered and for instance be integrated into the mobile device. This procedure allows that the manufacturer does not have to wait for the unique configuration but can deliver the secure element, which is customized later on. When the provisioning system is triggered the system might already have all required data or the system can fetch the required data from other server systems if required prior to the provisioning of the eUICC. In general, an update procedure is performed between the provisioning system and the eUICC and the provisioning system might therefore communicate with further servers, which deliver the required data. Consequently, the provisioning system can fetch missing information required for eUICC provisioning and accordingly communicate with further servers.

The customization of the secure element is the first task to be performed when the secure element is operated. Operating means the first power-on operation for instance when being integrated into the mobile phone. This requires that further processing steps and data communication with other servers is prevented. While no communication with further servers is performed, data can be collected regarding the unique configuration for each of the secure elements. Connecting data for the unique configuration requires that the server provides such data which may be provided by a network operator. The unique configuration holds the customization data which adapt the generic configurations. In this way the generic configuration is amended, meaning that an instruction set is enhanced, changed, or replaced. Any combination thereof will likewise customize the secure element.

The first power-on operation is the setting when the secure element is operated by the mobile device for the first time. Before the first power-on operation, the secure element holds the generic configuration and upon operating the secure element by the mobile device, the generic configuration is customized towards the unique configuration. The configuring of the secure element can for instance be performed by the mobile device into which the secure element is integrated. Commonly known interfaces can be used and accordingly, a server may provide the respective data which is transmitted from the end device to the secure element. The secure element as such provides a memory and a processor, which finally perform the customization.

The data for configuring the secure element is provided by the server which can be accomplished "over the air". The configuration as such is then performed using the mobile device into which the secure element is integrated. It may also be of advantage that the secure element uses its own hardware resources for configuration but receives respective data from the server.

According to an aspect of the present invention, the secure element is provided by means of a Universal Integrated Circuit Card UICC or an embedded Universal Integrated Circuit Card eUICC. This provides the advantage that commonly known secure elements can be provided, which are addressed in a novel way and accordingly, already established interfaces can be reused. Hence, no new hardware components have to be involved but rather present hardware components are operated according to the suggested method.

According to a further aspect of the present invention, preventing data communication implies that the first data communication and execution of operations refers to a configuring of the secure element. This provides the advantage that no further tasks are performed, and the first task actually to be performed is the customization of the secure element. Hence, it is prevented that further servers provide data for the secure element which has to be customized first. The customization is performed during an initialization process, which implies that no further actions are performed. According to a further aspect of the present invention the generic configuration is an image file being initially deployed on each of the secure elements. This provides the advantage that one single image file can be provided which fits all secure elements. Consequently, no unique configuration data needs to be provided during manufacturing time but rather the customization is performed once the secure elements are delivered and are operated in the field. Consequently, the customization process as such is performed later on compared to commonly known methods and accordingly, the secure elements can be delivered without unique configuration files. The image file may be a file as such but may likewise be any data object whatsoever. Hence, the generic configuration is provided by means of data objects. The configuration is performed upon performing a first power-on operation and consequently not during manufacturing time. To be able to provide secure provisioning over the air there is typically a need for unique security settings like keys and certificates but the rest of the eUICC image can be generic. Consequently, no unique configuration data is used during manufacturing time and later on the provisioning of the unique configuration and configuring the secure element according to respectively one unique configuration can be performed.
According to a further aspect of the present invention, the unique configuration comprises addresses of servers, an address of a domain name server, a profile, a firmware, instruction sets, configuration data, and/or mobile network operator data. This provides the advantage that the secure element can obtain an address of a resource providing the unique configuration data. Furthermore, in case only a name of the server is known, a domain name server may resolve such a name. Likewise, the unique configuration data as such can be provided directly by means of the unique configuration. In general, the unique configuration may not be unique regarding all secure elements but merely the fact is described that the unique configuration differs from the generic configuration. Hence, several secure elements may operate the same unique configuration and a further group of secure elements may operate further unique configurations. Consequently, a unique configuration holds concrete instructions being tailored to specific types of secure elements. It may also be the case that the unique configuration is the same as the generic configuration in case the generic configuration already holds compatibility with the underlying hardware and software platform.

According to a further aspect of the present invention, performing a first power-on operation comprises transmitting a trigger message. This provides the advantage that upon the first operation of the secure element by the mobile end device, further servers are notified and accordingly, such servers can provide the unique configuration. Transmitting a trigger message may imply that a broadcast is performed over the network indicating that the secure element is ready for customization.

According to a further aspect of the present invention, the unique configuration comprises values for customizing the generic configuration. This provides the advantage that the generic configuration can be adapted towards specific values describing the hardware and software platform of the secure element. Furthermore, a version or a type may be provided describing the required configuration data. In this way the customization data is provided and the generic configuration is initialized.

According to a further aspect of the present invention, after configuring the secure element further servers are notified in order to start communication with the secure element. This provides the advantage that once the initialization is completed and the generic data is collected by several further servers, such servers provide the unique configuration and offer respective services. Consequently, the unique configuration may be provided by several servers, which provide data in order to customize the secure element. Such servers may be provided in the form of a provisioning system or a subscription management server system. However, the present invention is not restricted to such servers.

According to a further aspect of the present invention, after configuring the secure element further information and configuration data is provided to the secure element. This provides the advantage that secure element-specific data is provided which may comprise profiles and further features to be installed on the secure element. For instance, a mobile network operation information may be required to establish further data connections between the secure element and servers.

According to a further aspect of the present invention, after configuring the secure element unused customization data is deleted. This provides the advantage that not only memory space is cleared but also sensitive data is deleted. Consequently, confidential information such as cryptographic information is no longer available.

According to a further aspect of the present invention, collecting the unique configuration comprises data exchange with further servers, addressing a data base, and/or manual input. This provides the advantage that several servers may be involved, such as the provisioning server, the subscription management server, and servers operated by the mobile network operator or solution and application providers. As explained with reference to the figures, such a server may comprise a database which holds several configurations, such as the unique configuration for each of the secure elements. Hence, the server is able to communicate with the secure element and thereby find out which platform is required for a specific secure element. Consequently, the unique configuration can be chosen upon analysis of configuration data of the secure element. The unique configuration can be created or simply read out from the database.

According to a further aspect of the present invention, collecting the unique configuration comprises obtaining from the instructions, profile data, and/or configuration files. This provides the advantage that every information required for establishing a connection with further servers is provided and the secure element is customized such that no further data communication is required. Consequently, further data communications refer to the transmittance of payload.

According to a further aspect of the present invention, interfaces are provided for data exchange with existing implementations. This provides the advantage that the suggested method can be operated using existing software such as the SubMan. The SubMan software is a specific software providing functionality of a subscription manager. The subscription manager as such is in conformance with known art, for instance the GSMA SAS Standard for Subscription Manager Roles. The provided interface makes it possible that the suggested method does not need to be implemented as a stand-alone system but rather may exchange data with further implementations.

The object is also solved by a system for on-demand customization of a secure element using a generic configuration, comprising an interface arranged to deploy the generic configuration on each of a number of secure elements using a generic provisioning server, a processor arranged to prevent data communication between the secure elements and further servers and meanwhile collecting a unique configuration for respectively each of the secure elements and a configuration unit upon performing a first power-on operation of the secure element in a mobile device arranged to trigger the provisioning of the unique configuration and configure the secure element according to respectively one unique configuration.

The suggested system comprises the secure element integrated in a mobile end device, as introduced before, and furthermore at least one server, such as the generic provisioning server. The person skilled in the art recognizes that the suggested components may be distributed over a network and exchange data over a communication interface. Furthermore, the suggested units may comprise such components which are potentially likewise distributed over a network.

The object is also solved by a computer program product implementing the suggested method and being arranged to operate the suggested system.

It is an advantage of the present invention that the method comprises method steps providing functionality which can likewise be implemented by structural features of the suggested system. Accordingly, the suggested system comprises structural features providing functionality which correspond to the method steps.

Further advantages of the present invention are demonstrated in the context of the accompanying figures, which show:
- Fig. 1:: components of the suggested system and communication flow according to an aspect of the present invention; and
- Fig. 2:: a schematic flowchart depicting the suggested method for on-demand customization of a secure element according to a further aspect of the present invention.

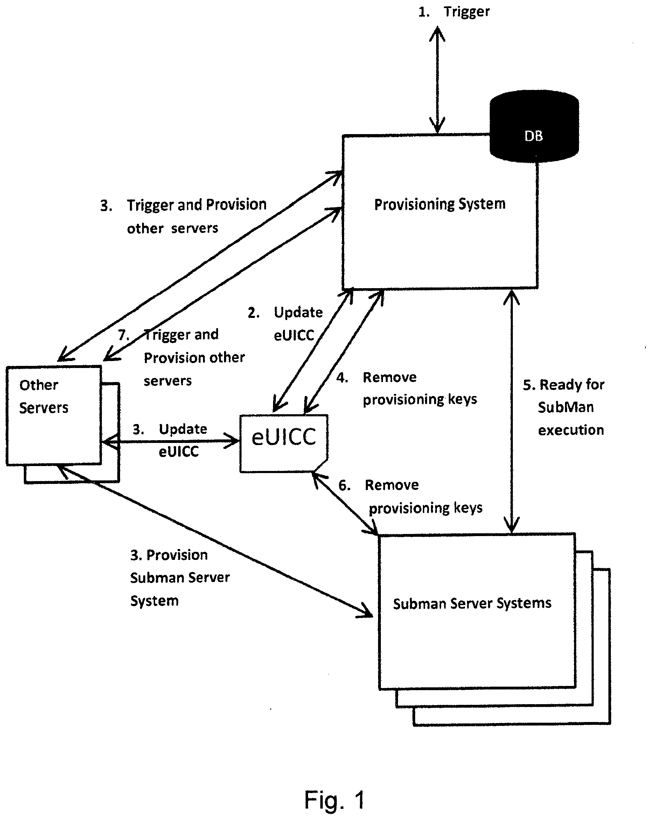

Fig. 1 shows in the middle the secure element being provided by an embedded Universal Integrated Circuit Card. The secure element is communicatively coupled with the provisioning system, the subscription management server system and further servers.

With the usage of First Network Attachment notification used in Subscription Manager SubMan V3 or any other triggering method the eUICC and server side can be (re-)configured after the eUICC is powered on but before any other procedures are executed between a eUICC and a server component.

By using a generic provisioning server, all deployed cards could have a generic configuration and the eUICC customization is done first after the eUICC is powered on in a device. Until that moment all eUICCs could have same generic configurations addressing the generic provisioning system. It makes possible to order eUICCs much earlier, in bigger batches and with less effort than today.

After eUICCs are ordered, all information required to provision the eUICCs with customer- and SubMan server system-specific information can be collected in the provisioning system, or in other servers. In addition, all eUICC-related information required to provision other servers, like Subscription Management server, can be prepared and collected.

The required server systems can be provisioned directly, or at the time when the eUICC trigger the provisioning system after first power-on.

After the eUICC is powered on, the generic provisioning system is triggered and different provisioning and configuration activities are executed. eUICC can be provisioned with unique values based on the information available in the provisioning system. Different server system and used device can also be provisioned.

When all provisioning activities are finalized, the Subscription Manager SubMan server is informed that eUICC is powered on and ready for processing any required activities with that server. Even other server components, like OTA platform and Device Management platform, can be informed that the eUICC is now available for any OTA actions.

Provisioning server may trigger other server systems is predefined and controlled order.

If the provisioning profile has used own keys with eUICC, those can be deleted since they are no longer needed afterwards.

After Subscription Manager SubMan server is informed that eUICC is ready for processing any required activities, the provisioning server can also trigger other servers to start different SubMan-related activities.

The communication flow indicated by Fig. 1 can be explained as follows:
1. Trigger: For example
   - Provisioning system handles First Network Attachment Notification procedure (used in SubMan V3 solution) on behalf of the SubMan server system
   - A start-up applet or another mechanism on eUICC informs provisioning system that the eUICC is powered on
   - Notification from a mobile network component, for example a notification from MNO that the subscription is attached to the mobile network
   - Any other potential trigger to inform that eUICC is available for a download
2. Update eUICC with appropriate data
   Provisioning System can have own database where different eUICC-related information is collected. Based on the available information, the card configurations can be updated.
   For example:
   - Destination Addresses for appropriate SubMan server system(s)
   - IP address / FQDN for appropriate SubMan server system(s)
   - Http Admin URI for appropriate SubMan server system
   - DNS addressing for appropriate SubMan server system
   - Create/update new keys for the appropriate SubMan server system Provisioning system may also ask other server components to provision the eUICC. For example MNO and/or SM-DP can update SubMan parameters stored in the provisioning profile on eUICC.
   - Update eUICC Operating System

The suggested second step of the underlying procedure may furthermore comprise sub steps such as the communication of the provisioning system with other servers. Consequently, the provisioning system can fetch missing information required for the eUICC provisioning. This makes sure that the provisioning system is provided with any data required during the provisioning proceeding and the eUICC can be updated.
3. Trigger and provision other servers
   Provisioning system can have own database where different eUICC-related information is collected. When provisioning system is triggered it populates different server system with the eUICC-related information available in the provisioning system and/or provided as part of the trigger. Or the provisioning system simply triggers the server component to start the provisioning process.
   For example
   - Registration in the MNO/ service provider systems
   - EIS registration in SubMan system
   - Device provisioning
   - Update their appropriate server system(s)
   - Provide virtual subscription data for appropriate SubMan server system(s) (RAC, VSPF files for example, or using different meta-data formats or data-formats in general)
   - Update subscription Address (MSISDN) for the eUICC in appropriate SubMan server system
4. Remove keys and other possible (sensitive) data on eUICC related to the Provisioning system.
   As last step, provisioning system can remove the keys used with the triggering.
5. Ready for SubMan execution
   Provisioning System informs appropriate SubMan server system that trigger is received and eUICC is ready for SubMan execution.
   For example:
   - By registering the First Network Attachment notification in the SubMan system
6. Optionally SubMan server system can remove the provisioning keys no longer needed.
7. Provisioning server can trigger other server systems also after SubMan server is informed that eUICC is ready for SubMan execution.
   For example:
   - Trigger different SubMan-related activities
   - Trigger different application and solution related systems

The above method steps are merely provided by way of example and are as such not limiting. Especially the provided explanation comprises optional features and may likewise comprise further aspects.

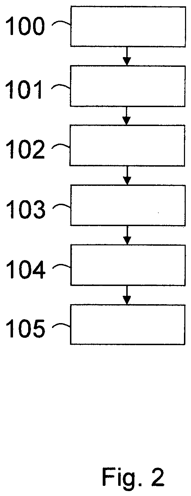

Fig. 2 shows a schematic flowchart of a method for on-demand customization of a secure element using a generic configuration, comprising the steps of deploying 100 the generic configuration on each of a number of secure elements using a generic provisioning server, preventing 101 data communication between the secure elements and further servers, and meanwhile collecting 102 a unique configuration for respectively each of the secure elements and upon performing 103, a first power-on operation of the secure element in a mobile device triggering 104 the provisioning of the unique configuration and configuring 105 the secure element according to respectively one unique configuration.

According to the present invention, the same generic card personalization can be used with large number of eUICCs. It makes the eUICC manufacturing simpler, faster and less error sensitive. Larger eUICC patches can be used and the time to market is shorter. Less manpower is needed to prepare the eUICCs. There is more time to prepare the required eUICC and server provisioning data. Flexibility is reached to change the eUICC configuration only when it is powered on.

Triggering of any other server component is performed. Provisioning system can also start several other workflows to execute different actions in a defined and controlled order. For example service activations, Device Management, populate SubMan server system with required virtual profiles and getting the appropriate MSISDN from MNO to SubMan server system.

The provisioning system can use separate keys to communicate with eUICC, compared with the final SubMan server system.

## Claims

1. A method for on-demand customization of a secure element using a generic configuration, comprising the steps:
- deploying (100) the generic configuration on each of a number of secure elements using a generic provisioning server;
- preventing (101) data communication between the secure elements and further servers and meanwhile collecting (102) a unique configuration for respectively each of the secure elements; and
- upon performing (103) a first power-on operation of the secure element in a mobile device, triggering (104) the provisioning of the unique configuration and configuring (105) the secure element according to respectively one unique configuration.

2. The method according to claim 1, **characterized in that** the secure element is provided by means of a Universal Integrated Circuit Card UICC or an embedded Universal Integrated Circuit Card eUICC.

3. The method according to claim 1 or 2, **characterized in that** preventing (101) data communication implies that the first data communication and execution of operations refers to a configuring of the secure element.

4. The method according to any one of the preceding claims, **characterized in that** the generic configuration is an image file being initially deployed on each of the secure elements.

5. The method according to any one of the preceding claims, **characterized in that** the unique configuration comprises addresses of servers, an address of a domain name server, a profile, a firmware, instruction sets, configuration data and/or mobile network operator data.

6. The method according to any one of the preceding claims, **characterized in that** performing (103) a first power-on operation comprises transmitting a trigger message.

7. The method according to any one of the preceding claims, **characterized in that** the unique configuration comprises values for customizing the generic configuration.

8. The method according to any one of the preceding claims, **characterized in that** after configuring (105) the secure element, further servers are notified in order to start communication with the secure element.

9. The method according to any one of the preceding claims, **characterized in that** after configuring (105) the secure element, further information and configuration data is provided to the secure element.

10. The method according to any one of the preceding claims, **characterized in that** after configuring (105) the secure element, unused customization data is deleted.

11. The method according to any one of the preceding claims, **characterized in that** collecting (102) the unique configuration comprises data exchange with further servers, addressing a database and/or manual input.

12. The method according to any one of the preceding claims, **characterized in that** collecting (102) the unique configuration comprises obtaining firmware instructions, profile data and/ or configuration files.

13. The method according to any one of the preceding claims, **characterized in that** interfaces are provided for data exchange with existing implementations.

14. A system for on-demand customization of a secure element using a generic configuration, comprising:
- an interface arranged to deploy (100) the generic configuration on each of a number of secure elements using a generic provisioning server;
- a processor arranged to prevent (101) data communication between the secure elements and further servers and meanwhile collecting (102) a unique configuration for respectively each of the secure elements; and
- a configuration unit upon performing (103) a first power-on operation of the secure element in a mobile device arranged to trigger (104) the provisioning of the unique configuration and configure (105) the secure element according to respectively one unique configuration.

15. A computer program product being arranged to perform a method in accordance with any one of the preceding claims 1 to 13, when being executed on a computer.
